# EUROPEAN PATENT APPLICATION

(11) **EP 1 396 602 A1**
(43) Date of publication of application: **10.03.2004**
(21) Application number: 03255493.3
(22) Date of filing: 03.09.2003
(51) Int. Cl.: E06B 1/60, F16B 15/00

(54) **Fixing means and method**

(30) Priority: 04.09.2002 GB 0220492
(71) Applicant: MDF Profiles Limited, Charlbury, Oxfordshire, OX7 3EW (GB)
(72) Inventor: Alcock, David, Gwynedd LL40 2 PH Wales (GB)
(74) Representative: Mosey, Stephen George

(57) **Abstract**

A door frame (27) is fixed to brickwork (29) defining the opening for the door by the use of a fixing means in the form of a one-piece pressed steel bracket (10). The bracket has a base part (11) at the respective opposite ends of which are respective fixing portions (12) intended to be folded through 90° to the base part and having openings therein for fixing members to secure the fixing portions to front and rear faces respectively of the brickwork. The base part (11) is made up of flat portions (16) at respective opposite side of a deformable centre portion (17) from respective opposite sides of which engagement tongues (22, 23) extend beneath the portions (16). In use the tongues move to engage respective opposite sides of the recess containing the fixing means when the centre portion (17) is deformed, thereby securing the first element to the fixing means.

## Description

This invention relates to a fixing means for use in securing a first element, such as a side of a frame, to a second element, such as a wall which defines an opening at which the frame is to be disposed. In particular the fixing means is for securing a door frame to the brickwork of the wall which defines the door frame opening. As used herein, the term 'frame' includes in its scope both door casings and door linings. The invention also relates to a method using said fixing means and to a kit of parts including said fixing means.

Presently the fixing of the door frame to the wall is carried out by passing fixing elements, such as screws or bolts, through the outer, visible face of the door frame component, into the brickwork behind it. This is aesthetically non-desirable, as the fixing can be seen when the door is open, and moreover remedial work may be required, particularly where the frame component is in the form of wrapped wood or is veneered.

An object of the invention is to provide a fixing means for use in securing a first element to a second element in a convenient and effective form, in which the fixing means is not visible. A further object is to provide a method of securing said first and second elements using said fixing means, and a kit of parts including said fixing means and said first element.

According to a first aspect of the invention, a fixing means intended to be at least partly disposed in a recess in a first element for use in securing said first element to a second element, comprises a first portion which is deformable, in use, between a first position, in which when the fixing means is at least partly disposed in said recess, in use, engagement formations at respective opposite sides of the first portion are spaced from respective opposite sides of the recess, and a second position, in which said engagement formations grip said opposite sides of the recess to secure the fixing means to the first element, and a fixing portion for securing, in use, the fixing means to said second element.

The recess is, in one embodiment, a parallel-sided rebate extending longitudinally in the rear of the first element.

Preferably the fixing means comprises a base part formed of flat portions at respective opposite sides of said first portion, and more preferably the first portion being constituted in its first position by a pair of surfaces angled out of a common plane of the flat portions and meeting at an apex. Desirably said first portion is deformable from its first position to its second position, in use, by the application of force onto said apex. This causes the first portion to deform to its second position with said pair of surfaces deforming substantially into said common plane and causing movement of said engagement formations to grip said sides of the recess. Conveniently the engagement formations are toothed tags projecting outwardly from the opposite side of the base part from said first portion. Advantageously the fixing means is of steel, for example a pressing, and more preferably it is of one piece. The fixing portion is an extension of one of said flat portions which is bent or is bendable to lie laterally thereto in a direction away from the tags.

The invention also relates to a method of securing together the first and second elements using said fixing means, and separately also relates to a kit of parts comprising said fixing means and at least one of said first elements.

The invention will now be described, by way of example, with reference to the accompanying drawings, in which:
Figure 1 is a perspective view of fixing means of a first aspect of the invention,
Figures 2 and 3 are respectively a side view and an interior plan view of the fixing means,
Figure 4 is a cross-sectional view on line 4-4 of Figure 2,
Figures 5 and 6 are schematic perspective views showing the fixing means, secured to a door frame, in position to be secured, and then partly secured, respectively, to brickwork defining a door frame opening,
Figure 7 very schematically shows a horizontal section of the arrangements of Figures 5 and 6, and
Figure 8 is an enlarged schematic perspective view showing the fixing of Figures 5 and 6 in detail.

Although in one aspect, the present invention relates generally to the securing of a first element to a second element using fixing means according to a specific inventive aspect of the invention, it has particular application to the securing of a door frame to the brickwork of the wall at which the door opening is defined, and the invention will thus hereinafter be described in relation to this application. However it will be appreciated that the fixing means of one aspect of the invention is not limited to its use in fixing the door frame to a wall or similar structure and could, for example, merely be used to fix one panel to another. A specific alternative use is to secure window boards.

With regard to the description of the invention in relation to a door frame, it will be understood that as used herein the term 'frame' includes in its scope both door casings, where there is a fixed door stop, and door linings, where there is a loose door stop. As is well known, the door frame opening is normally defined by brickwork which defines opposite vertical sides of the door opening as well as an upper cross-structure. Accordingly the frame to be fitted at this opening will normally comprise two vertical door jambs and a door header joining the respective upper ends of the jambs and being disposed at 90° thereto, i.e. generally horizontal. A complete door frame assembly utilising such a door frame construction may include a sill joining the lower ends of the jambs, means for hanging a door on one of the jambs and closing against a rebate on the other of the jambs, and a lock strike provided at said other jamb.

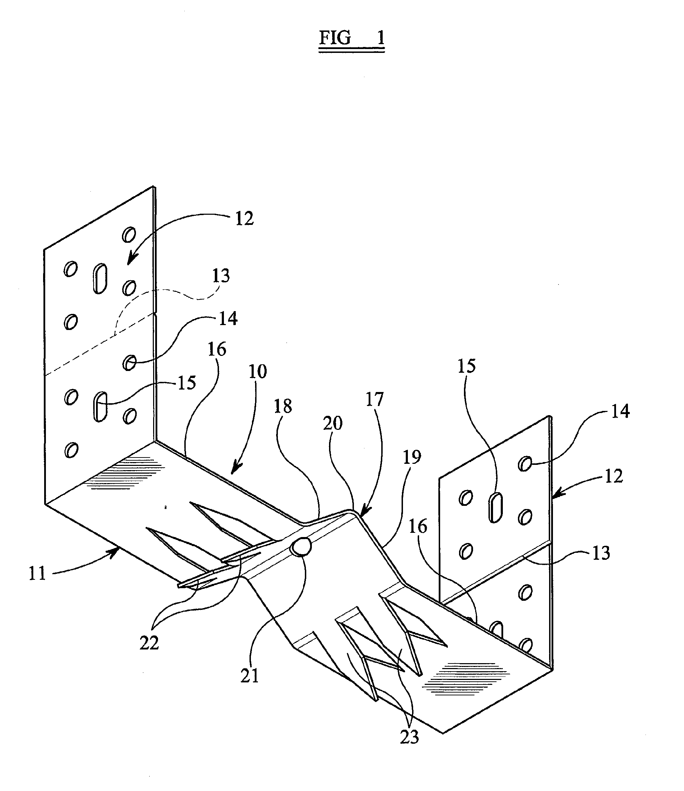

Figures 1 to 4 show fixing means of one aspect of the present invention, in the form of a one-piece stainless steel fixing bracket 10. Preferably the bracket is stamped to be in the form of a galvanised steel pressing. However it will be understood that the bracket could be made of material other than steel, could be produced by a different process, and could be formed in other than one-piece, i.e. respective parts thereof could be telescopically engaged together. It is however convenient that the bracket is in one piece, even though the width of the brickwork defining the structural part of the door opening space may not be wholly constant from one building to another. It is however believed that two different widths of bracket would be sufficient to cater for the majority of door opening spaces. Moreover as will be described herein, the bracket of the present invention is adapted to cater for varying distances between the respective opposite brickwork sides of said openings.

The structure of the bracket 10 will be now described with reference to Figures 1 to 4. Although, as illustrated therein, the bracket is generally in the form of a U-shaped channel, it would not normally be sold and/or supplied in this form but would have the sides of the channel-form in the same general plane as the 'base' of the channel, thereby to be in the general form of a flat strip.

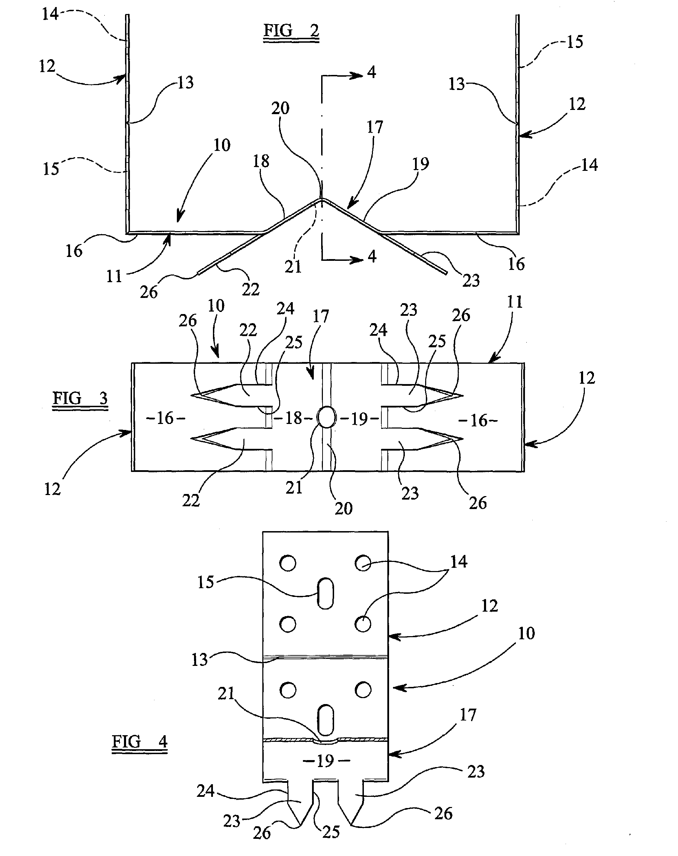

Accordingly in such a form, the bracket would comprise a base part 11 at the respective opposite ends of which are formed respective fixing portions 12, which are arranged, in use, as will be described, to be folded to a position at 90° relative to the base part at one side thereof, for example as shown best in Figures 1 and 2. Thus a crease line or other suitable means allowing this 90° bending is provided at the junction between the base part 11 and each fixing portion 12. Moreover as can be seen from Figures 1 and 2, each fixing portion has a central lateral score line 13 in its side which is at the interior of the bracket when the fixing portions 12 are folded at 90° to the base part 11, so that, as will be described, the length of the fixing portion can be reduced, if required, by snapping off the outer half thereof along the score line 13, in use. It will be appreciated that the length of each fixing portion could be made longer or shorter than that shown in Figures 1 and 2, with one or more such score lines being provided laterally across the length of the fixing portion so as to provide versatility, as will be described, when the fixing portion is secured to the side of the brickwork forming the structure which defines the door frame opening space. As can be seen best from Figure 1, each half of each fixing portion 12 which is divided by the score line 13, is formed with an array of circular openings 14 and a central slot 15 for the passage appropriately of fixing means, not shown, to secure the fixing portion to the brickwork at the side of the structure defining the door frame opening, referred to above. It will be appreciated that the number, form and arrangement of openings and slots can be varied as required.

As shown in Figures 1 to 4, the base part 11 is formed of flat portions 16 at respective opposite sides of a deformable centre portion 17, so that the base part, and indeed, in this example, the whole bracket, is symmetrical about a plane through the centre of the base part 11 at 90° to the flat portions 16. The centre portion 17 is formed by a pair of flat surface portions 18, 19 respectively, which extend out of the general plane of the base part 11, which plane is common to both of the flat portions 16, each of the surface portions 18, 19 being angled at the same degree to this common plane so as to meet at an apex 20 exactly midway along the base part 11. As can be seen from Figures 1 and 2, the surface portions 18, 19 extend out of the plane of the base part 11 at the same side of the fixing bracket as that to which the fixing portions 12 are bent, in use. As shown best in Figures 1 and 3, a circular opening 21 is provided through the apex 20 of the base part 11, this opening being centrally disposed both longitudinally and laterally of the base part.

At the opposite side of the base part 11 from that at which the surface portions 18, 19 extend, there are provided, at the respective opposite sides of the centre portion 17, respective pairs of engagement tongues 22, 23. As seen best in Figure 3, each tongue extends parallel to the sides of the base part 11 and in each pair the tongues are disposed equally at respective opposite sides of a longitudinal centre line through the base part 11. Each tongue, which extends at approximately 30° to the base part 11 has a pair of parallel sides 24, 25 respectively and a pointed tip 26 at its extremity. Each tongue is integrally connected at its end remote from its tip to the base part 10 substantially at the junction of the centre portion 17 with the flat portions 16, each tongue being pressed out of the common plane containing the flat portion 16 as shown best in Figures 1 and 3, with, in this embodiment, the cut out in each of the flat portions from which the tongue is pressed being, at the pointed tip part, slightly larger than the tongue. However this is not essential, and it is merely possible to provide the appropriate cut in each flat portion 16 and then to press out the tongue exactly corresponding to said cut, by the appropriate amount so that it is angled as required relative to the base part 11. As can be seen from Figure 2, in this embodiment, the angle of extent of each of the surface portions 18, 19 is the same as the angle of slope of each of the teeth, i.e. approximately 30°, so that, as can be seen from Figure 2, at each side of the apex the two teeth are in the same plane as the flat surface portion.

As mentioned above, the bracket would normally be supplied, for use, in the form shown in Figures 1 to 4, but with the fixing portions 12 lying in the common plane which contains the flat portion 16 of the base part 11, so that the bracket was, in effect, in the form of a flat strip. In this form, the centre portion 17 would be in its first position, in which it is deformable, as will be described, whilst the pairs of tongues would be as shown projecting from the opposite side of the base part 11 from that at which the centre portion extends.

Figure 7 shows how the bracket 10 is fixed to a door frame element, such as a door jamb 27. In particular it will be noted that the rear surface of the door jamb 27 is provided with a parallel sided longitudinal recess or rebate 28 sized to receive the bracket 10 in the manner which will be apparent from the description hereinafter.

For one bracket 10, the bracket is placed in position in the rebate so that its pairs of teeth lie against the base of the rebate with the fixing portions 12 lying generally spaced above the respective side surfaces of the door jamb at opposite sides of the rebate. The respective fold lines between the fixing portions 12 and the base part 11 lie substantially at the respective opposite sides of the rebate. It will be understood that a number of the brackets would be placed, preferably equi-spaced, along the length of the rebate in the door jamb, and typically three brackets will be provided with each vertical door jamb and a single bracket provided in the rebate in the head of the door frame which connects the two door jambs together. However the number of brackets employed and the spacing therebetween could be varied as required.

Once the frame is in position, the centre portion 17 is deformed and moved from its first to its second position, preferably by striking the apex 20 centrally with a hammer or equivalent hand tool. This striking 'flattens' the centre portion 17, thereby 'spreading' the bracket, and moving the pairs of teeth in opposite directions so that they are pushed into the sides and/or base of the rebate in the door jamb, Figure 8, this generally being of MDF (Medium Density Fibreboard' material), thereby firmly securing the bracket to the rear of the door jamb. The striking is continued as required until the bracket is at least level with the rear face of the door jamb, i.e. the fixing portions 12 bear against the respective opposite side surfaces at the opposite sides of the rebate. The remaining brackets are similarly correctly positioned and then fixed.

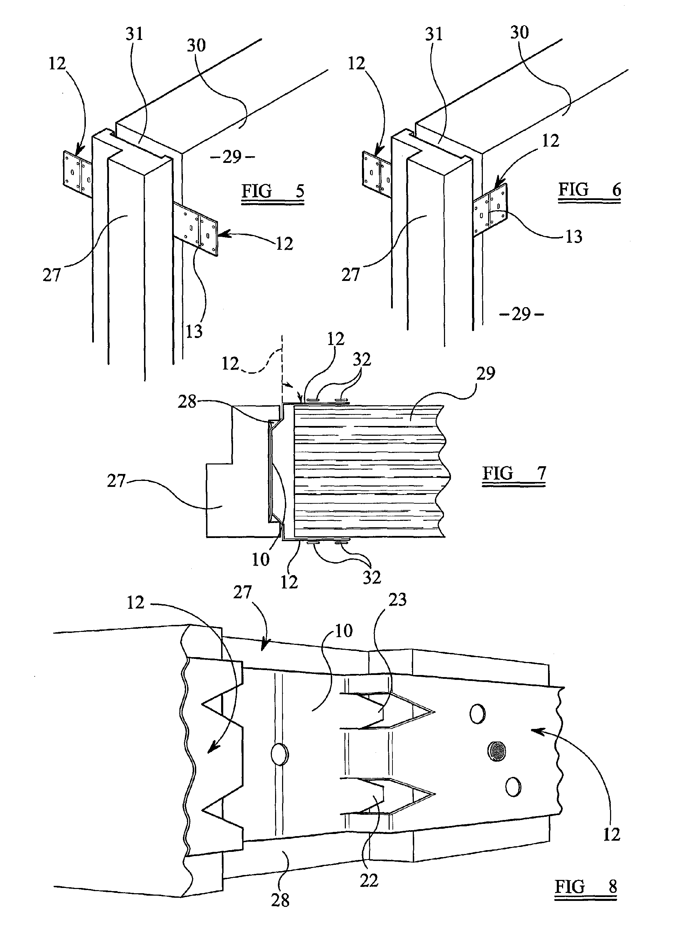

The door frame is then received into the opening defined by the brickwork 29 (or studding opening) with both portions 12 in the plane of the portions 16, as shown in Figure 5, or with one of the fixing portions 12 bent through 90° (Figure 6) to its position shown in Figures 1 to 4. This bent fixing portion is brought into engagement with a side 30 of the brickwork, this being at 90° to the face 31 of the brickwork at which the door jamb is to be disposed. The frame is then adjusted to the vertical and correct door opening width. During this adjustment operation the circular opening 21 can receive a fixing element provisionally to secure the door jamb in place. With the Figure 5 arrangement, one portion 12 is bent into position when the frame is correctly positioned at the brickwork. Final adjustment is then made, followed by final fixing which is effected by means of screws/nails/bolts, schematically indicated at 32, passing through the openings 14 and slot 15 in the bent fixing portion 12. This final fixing is carried out for said one portion 12 of all the brackets 10 secured to the door frame. Both of the fixing portions 12 can be used to secure a bracket to the brickwork, particularly where this is of the same standard width as the opening defined by the bracket between said fixing portions when they are folded through 90°. In this case, the procedure for fixing the one portion 12 of each bracket is repeated for the other portion 12. Alternatively only one of the fixing portions could be used, and indeed only one might be provided, the rear edge of the bracket being secured in place by an architrave. As described, the fixing process for one door jamb is repeated for the other door jamb and the header in a similar manner in order to complete the fixing of the door frame components to the brickwork which defines the door frame opening, by the use of the brackets as described. It is preferable that the rebate is moulded in the rear of each of the casings/linings of the door frame, but in an alternative arrangement, the rebate could be provided by any other suitable means. Additionally individual separate recesses could be provided for receiving the brackets rather than a continuous rebate, although it will be appreciated that for adjustment positioning, the provision of a continuous rebate along the length of the jamb or header is more convenient. The fixing by means of the opening 21 provides extra security. As mentioned previously, the brackets could be in two parts with interfitting telescopic engagement and this will enable adjustment of the bracket to be made to fit different widths of brickwork at the door frame opening and thus more likely allow both of the fixing portions 12 to be bent through 90° and used for fixing to said brickwork sides.

From the above it will be appreciated that the bracket fixing system for door linings/casings achieves a stable fixing which is hidden from view and does not damage the face of the lining material. This thus represents an improvement over the prior art, both from the point of view of aesthetics and also by preventing any damage to the face of the lining material. As the fixing of the bracket to the door frame is hidden, no fixing is required through the out facing surface. The system is adjustable for vertical alignment and door width tolerances whilst the fixing portions 12 can fold round the wall thickness to create the correct width before final fixing, the bending thus suiting variant wall thicknesses. As mentioned the bracket can be in two sizes to accommodate wall thicknesses for the majority of walls used. The arrangement of the invention allows easy fixing of any system from a simple door frame to a complete door set or kit. Time and money is saved on site as the fitting is quick and easy, with no special tools required and no making good needed after assembly. Finally no design change to face/door area is required to accommodate the fixing system.

Aside from the bracket itself, another aspect of the invention resides in a method of securing together first and second elements using said fixing means of said first aspect. Typically this is the securing together of a door frame element to a wall structure using such a fixing means, and additionally the invention also relates to a kit of parts including at least one of said fixing means of said first aspect of the invention together with at least one first element, this in particular being a door frame component which has its rear face recessed/rebated to receive the bracket in a first position and thereafter in a second position once deformation has taken place and the bracket is secured to the frame component.

## Claims

1. A fixing means intended to be at least partly disposed in a recess in a first element for use in securing said first element to a second element, comprising a first portion which is deformable, in use, between a first position, in which when the fixing means is at least partly disposed in said recess, in use, engagement formations at respective opposite sides of the first portion are spaced from respective opposite sides of the recess and a second position, in which said engagement formations grip said opposite sides of the recess to secure the fixing means to the first element, and a fixing portion for securing, in use, the fixing means to the second element.

2. A fixing means as claimed in Claim 1, comprising a base part formed of flat portions at respective opposite sides of said first portion.

3. A fixing means as claimed in Claim 2, wherein the first portion is constituted in its first position by a pair of surfaces angled out of a common plane of the flat portions and meeting at an apex.

4. A fixing means as claimed in Claim 3, wherein said first portion is deformable from its first position to its second position, in use, by the application of force onto said apex.

5. A fixing means as claimed in Claim 4, wherein said application of force causes the first portion to deform to its second position with said pair of surfaces deforming substantially into said common plane and causing movement of said engagement formations to grip said sides of the recess.

6. A fixing means as claimed in any one of Claims 2 to 5, wherein the engagement formations are toothed tags projecting outwardly from the opposite side of the base part from said first portion.

7. A fixing means as claimed in Claim 6, wherein the fixing portion is an extension of one of the flat portions which is bent or is bendable to lie laterally thereto in a direction away from the tags.

8. A fixing means as claimed in Claim 7, wherein there are two fixing portions in the form of extensions of the flat portions respectively.

9. A fixing means as claimed in Claim 7 or Claim 8, wherein the or at least one fixing portion has a score line for reducing the length thereof.

10. A fixing means as claimed in any one of the preceding Claims, in which the or each fixing portion has at least one opening therethrough to receive one or more fixing elements therethrough in use.

11. A fixing means as claimed in any one of Claims 1 to 10, wherein the first portion has an opening for a fixing element.

12. A fixing means as claimed in any one of the preceding Claims, which is of steel.

13. A fixing means as claimed in Claim 12, which is a pressing.

14. A fixing means as claimed in Claim 12 or Claim 13, which is in one piece.

15. A method of securing together a first element having a recess therein and a second element using fixing means comprising a first portion, which is deformable, in use, between a first position and a second position, engagement formations at respective opposite sides of the first portion, and a fixing portion, the method comprising at least partly disposing the fixing means in said recess, the first portion being in its first position where said engagement formations are spaced from respective opposite sides of the recess, deforming said first portion to its second position in which said engagement formations grip said opposite sides of the recess to secure the fixing means to the first element, and securing said fixing portion, and thus the fixing means, to said second element.

16. A method as claimed in Claim 14, wherein said fixing portion is bent through 90° to a first face of the second element against which the first portion is engaged, and secured to a second face at 90° to said first face.

17. A method as claimed in Claim 16, wherein the fixing portion is secured to said second surface by one or more fixing elements passing through one or more openings in the fixing portion.

18. A method as claimed in Claim 16, wherein prior to securement of said fixing portion to said second face, during adjustment of the first element relative to the second element, the first element is provisionally held in place by a fixing member through an opening in said first portion of the fixing means.

19. A method as claimed in any one of Claims 15 to 18, wherein the length of the fixing portion is reduced by breaking part of it off along a score line thereof.

20. A kit of parts for securing a first element to a second member comprising said first element having a recess therein and a fixing means intended to be at least partly received in said recess, in use, the fixing means comprising a first portion, deformable in use between a first position and a second position, engagement formations at respective opposite sides of the first portion and adapted to engage opposite sides of the recess in the second position of the first portion, and a fixing portion for securement, in use, to the second element.
